## Europäisches Patentamt
## European Patent Office
## Office européen des brevets

(11) Publication number: **0 087 145**
**B1**

(12) **EUROPEAN PATENT SPECIFICATION**

(45) Date of publication of patent specification: **29.10.86**

(51) Int. Cl.⁴: **C 08 L 81/02, C 08 K 3/24**

(21) Application number: **83101582.1**

(22) Date of filing: **18.02.83**

(54) Arylene sulfide compositions containing calcium sulfate.

(30) Priority: **22.02.82 US 350949**

(43) Date of publication of application:
**31.08.83 Bulletin 83/35**

(45) Publication of the grant of the patent:
**29.10.86 Bulletin 86/44**

(84) Designated Contracting States:
**AT BE CH DE FR GB IT LI LU NL SE**

(56) References cited:
**DE-A-2 524 121**
**DE-A-2 728 233**
**US-A-3 677 994**

(73) Proprietor: **PHILLIPS PETROLEUM COMPANY**
**5th and Keeler**
**Bartlesville Oklahoma 74004 (US)**

(72) Inventor: **Dix, James Seward**
**201 S.W. Ninth**
**Bartlesville Oklahoma 74003 (US)**

(74) Representative: **Dost, Wolfgang, Dr.rer.nat.,**
**Dipl.-Chem. et al**
**Patent- und Rechtsanwälte Bardehle-**
**Pagenberg-Dost-Altenburg & Partner Postfach**
**86 06 20**
**D-8000 München 86 (DE)**

## Description

Background of the Invention

This invention relates to poly(arylene sulfide) and, more particularly, to compositions of arylene sulfide polymer and filler materials. In another of its aspects this invention relates to arylene sulfide polymer compositions having good insulation resistance. In yet another aspect of this invention it relates to arylene sulfide polymer compositions having good surface gloss. In yet another aspect of the invention it relates to the addition of calcium sulfate to polymeric compositions.

One of the important uses of poly(arylene sulfide) is in molding compositions. By combining poly(arylene sulfide) with reinforcing agents such as fiberglass and with fillers, molding compositions can be tailored for certain end uses. Up until now a composition in which poly(arylene sulfide), fiberglass, and calcium carbonate are combined has been a standard for providing molding compositions having good strength, good insulation resistance, and good surface gloss. It has now been found that by substituting calcium sulfate for the calcium carbonate in these compositions that compounds that upon molding have better surface gloss and insulation resistance than those containing calcium carbonate and having equally good strength characteristics can be produced. It has also been found that by restricting the particle size of the calcium sulfate incorporated in the compositions to a finely ground material that the surface gloss and insulation resistance of the molded products can be further improved. Articles such as automotive headlamp reflectors and the like molded from the invention compositions exhibit a good balance of mechanical properties and smooth surfaces.

It is therefore an object of this invention to provide molding compositions based on poly(arylene sulfide) that have good insulation resistance and surface gloss when molded. It is another object of this invention to provide a filled polymer composition in which calcium sulfate is used as filler. It is still another object of this invention to provide a method for improving surface gloss and insulation resistance characteristics of molded objects produced from poly(arylene sulfide).

Other aspects, objects and the various advantages of this invention will become apparent upon reading this specification and the appended claims.

Statement of the Invention

According to this invention a composition is provided which has among its components poly(arylene sulfide), fiberglass, and calcium sulfate as essential ingredients and which can contain minor amounts of other well-known additives useful in the preparation of poly(arylene sulfide) compositions.

In one embodiment of the invention a method is provided for attaining compositions based on poly(arylene sulfide) and fiberglass which when molded provide good surface gloss and insulation resistance. By the method of this invention calcium sulfate is admixed with the fiberglass and poly(arylene sulfide) to provide these characteristics. In a further embodiment of the invention both the surface gloss and insulation resistance characteristics can be improved by restricting the calcium sulfate employed to a material that has been finely ground.

The poly(arylene sulfide) resins, often abbreviated PAS, contemplated in the compositions of this invention include those described in US—A—3,354,129 and 3,919,177. The presently preferred polymer is poly(phenylene sulfide), often abbreviated PPS.

The term poly(arylene sulfide) includes homopolymers and the normally solid arylene sulfide copolymers and terpolymers having melting or softening points of at least 300°F (149°C) and more preferably from 400 to 900°F (204°—482°C). Other examples of poly(arylene sulfides) are poly(4,4'-biphenylene sulfide), poly(2,4-tolylene sulfide) and a copolymer of p-dichlorobenzene, 2,4-dichlorotoluene and sodium sulfide.

The fiberglass useful in the present invention can be chosen from any of those products commercially available which generally find use as fillers and reinforcing agents in polymeric blends.

Similarly, the calcium sulfate useful in this invention can be chosen from among any of those products commercially available which are generally used as fillers in various polymeric blends. The calcium sulfate will have an average particle size within the range of 0.5 to 10 μm and preferably will have an average particle size in the range of 0.5 to 5 μm. The finely divided calcium sulfate that will usually be employed in the compositions is a commercially available material of which typically, 98 weight percent passes through a 20 micrometre screen and the average particle size is 1.4 micrometres. A typical chemical analysis shows the material to comprise about 97.7 weight percent $CaSO_4$ with the major impurity of $CaCO_3$. $MgCO_3$ consisting of about 1.3 weight percent. The remaining impurities comprise silica, metal oxides and water totalling about 1 weight percent. Thus, this is an anhydrous calcium sulfate as opposed, for example, to the dihydrate (gypsum) or hemihydrate. As will be illustrated in the examples the surface gloss and the insulation resistance of molded compositions containing poly(arylene sulfide) and calcium sulfate become greater as the average size of the calcium sulfate particles is decreased.

As is usual in polymeric blends based on poly(arylene sulfide) a variety of other additives can be used in minor amounts of up to about 2 percent by weight of the total composition. These additives include such materials as flow-improving (processability) agents, silane, and pigments. The invention also embraces the use of other fillers such as talc, calcium metasilicate, carbon black, and iron oxides which can be used in relatively large amounts of even up to 80 percent of the total filler in the composition.

2

Organic silanes can be of particular use in the compositions to improve water resistance and to decrease or at least stabilize the linear coefficient of expansion and also function as coupling agents for the polymer and the fillers. Specific examples of the silanes include gamma-glycidoxypropyl-trimethoxysilane, methyltrimethoxysilane, beta-(3,4-epoxycyclohexyl)-ethyltrimethoxysilane, N-beta(N-vinylbenzylamine)ethyl gamma-amino-propyltrimethoxysilane monohydrogen chloride and gamma-mercaptopropyltrimethoxysilane. The latter compound is presently preferred.

The processability agents that can be employed in the invention compositions are selected from among solid ethylene polymers (see US—A—4,134,874), saturated fatty acid salts such as zinc stearate and the N,N'-alkylenebis(alkanamides), glycerides and phosphated glycerides of saturated fatty acids containing from 10—30 carbon atoms, mono- and dialkanolamides derived from saturated fatty acids and esters derived from a saturated long-chain fatty acid and long-chain saturated aliphatic alcohol.

The mineral fillers encompass, for example, talc, silica, calcium carbonate and lithium carbonate, such as disclosed in US—A—4,176,098. Mineral fibers such as processed mineral fibers or Wollastonite, can also be used.

The pigments employed in the compositions are those conventionally known which can tolerate the relatively high processing temperatures required, e.g., 600°F (316°C). Typical examples include titanium dioxide, iron oxide, cadmium sulfide, phthalocyanine blue, carbon black, and mixtures thereof.

The glass employed in the compositions can be selected from among fibers, beads and hollow spheres. Generally, fibers are preferred and they can consist of roving and chopped strands, e.g., 50—3000 μm long and 5—190 μm in diameter.

In general, the three essential ingredients of the composition will be present in amounts ranging from 30 to 65 percent by weight, preferably 30 to 50 percent by weight of poly(arylene sulfide); 5 to 50 percent by weight, preferably 5 to 40 percent by weight of fiberglass; and from 2 to 60 weight percent, preferably 5 to 50 weight percent of calcium sulfate. The amount of calcium sulfate stated above can be partially substituted by other fillers but there should be a minimum of about 5 percent by weight of calcium sulfate present in the compositions of this invention when mixed fillers are used.

The mode of mixing or blending compositions useful in the present process include the conventional processes as known in the art. Particularly useful is dry blending using commercial apparatus followed by extrusion and pelleting using commercial apparatus.

The examples following should be taken as exemplary and not exclusive in illustrating the invention.

The arylene sulfide polymers, especially poly/phenylene sulfide), abbreviated PPS, are described in US—A—3,354,129 and 3,919,177.

Example 1

Dry blends of PPS Powder, fiber glass, mineral filler(s), lithium carbonate and linear polyethylene powder were prepared by mixing in a Henschel mixer at 1000 RPM at ambient temperature (about 23°C). All components except the glass were mixed for 5 minutes, the glass was added and the composition was mixed an additional 30 seconds. Each blend was further processed by passage through a 46 mm extruder at a stock temperature of 600°F (316°C) and converted into strands by a die attached to the extruder. The strands were chopped into pellets by rotating knives.

Each composition contained 35 parts by weight PPS (prepared in accordance with US—A—3,354,129 and thermally precured to a nominal melt flow of 850 g/10 minutes as determined in accordance with ASTMD 1238—70 at 316°C and 5 kg weight), 35 parts by weight fiber glass unless specified later (Owen-Corning Fiberglass Corp., Toledo, Ohio, designated as grade 49 7AA chopped strands, about 1/8 inch (3.2 mm) in length), 30 parts by weight filler(s), unless specified otherwise, 1 part by weight $Li_2CO_3$ powder and 0.25 part by weight polyethylene powder having a density of 0.962 $g/cm^3$ and a nominal melt index of about 30 g/10 minutes, ASTMD 1238—70 at 190°C and 2.16 kg weight.

The fillers employed are as follows:

Calcium sulfate 1, average particle size of 1.4 μm, purchased as grade CA—5 from United States Gypsum Co., Chicago, IL.

Calcium sulfate 2, average particle size of 7.0 μm designated as Snow White® filler, U.S. Gypsum Co.

Talc, medium oil absorption, high brightness general purpose with a Hegman fineness grade of 4, purchased from Whittaker, Clark and Daniels, Plainfield, NJ designated as 2620 grade.

Calcium carbonate 1, average particle size of 3 μm, purchased as Camel-Wite® fine ground limestone from Stone Products, Hunt Valley, MD.

Calcium carbonate 2, average particle size of 10—15 μm, 99.5 percent through 325 mesh (44 μm), purchased as number 10 white from Georgia Marble Co., Tate, GB).

The test specimens for tensile strength and elongation, flexural modulus and flexural strength, insulation resistance, arc resistance and Izod impact strength were prepared by injection molding of the pellets in a 2 oz (57 g) machine at a stock temperature of 600°F (316°C) and a mold temperature of 275°F (135°C).

The test specimens were evaluated according to the following procedures:

3

| | |
|---|---|
| tensile (MPa) and elongation (%): | ASTMD 638 type IV bars crosshead speed of 0.5 cm/min |
| flexural modulus (GPa) and flexural strength (MPa): | ASTMD 790 |
| Izod impact strength (joules/m): | ASTMD 256 |
| arc resistance (seconds): | ASTMD 495 |
| arc tracking (inches/minute) (cm/min): | UL764A |
| flow rate (g/10 minutes): | ASTMD 1238—70, 316°C and 5 kg load |

spiral flow (cm), above described injection molding machine at stock temperature of 615°F (324°C), a mold temperature of 200°F (90°C), maximum injection speed and a pressure of 18,500 psi (1280 MPa), mold channel depth of 1/16" (1.6 mm) and width of 1/4" (6.4 mm), insulation resistance (48 hours, 90°C, 95 percent relative humidity). General method, ASTMD 257, method for controlling relative humidity is given in ASTM recommended practice E104.

The nature of each composition and the results obtained are presented in Table 1.

4

TABLE 1

Properties of PPS-Filler Compositions

| | Invention | Control | Control | Control |
|---|---|---|---|---|
| Run No. | 1 | 2 | 3 | 4[a] |
| Filler | $CaSO_4$ 1 | $CaCO_3$ 1 | $CaCO_3$ 2 | $CaSO_4$ 1(15) $CaCO_3$ 1(15) |
| Flow rate, g/10 minutes | 132 | 104 | 105 | 117 |
| Spiral flow, inches (cm) | 10 3/8(26.4) | 10 3/8(26.4) | 10 1/4(26.0) | 11(27.9) |
| Tensile strength, psi (MPa), unannealed | 14,300(98.5) | 13,100(90.3) | 14,500(100) | 13,050(90.0) |
| Elongation, % | 0.63 | 0.46 | 0.63 | 0.57 |
| Flexural modulus, psi($\times 10^6$)(GPa) | 2.33(16.1) | 2.40(16.6) | 2.31(15.9) | 2.30(15.9) |
| Flexural strength, psi(MPa) | 22,500(155) | 20,500(141) | 22,200(153) | 20,700(143) |
| Izod impact strength | | | | |
| notched, ft. lbs/in (J/m) | 0.93(50) | 0.73(39) | 0.92(49) | 0.71(38) |
| unnotched, ft. lbs/in (J/m) | 2.46(132) | 1.79(96) | 2.62(140) | 1.94(104) |
| Arc resistance, seconds | 182 | 181 | 181 | 178 |
| Arc tracking, inches/min (cm/min) | 0(0) | 0(0) | 1.3(3.3) | 0(0) |
| Insulation resistance, ohms | Infinity | $2.3 \times 10^{10}$ | $7.2 \times 10^9$ | $2 \times 10^{12}$ |

(a) Composition contains 15 parts by weight each of $CaSO_4$ 1 and $CaCO_3$ 1.

In comparing the composition of invention run 1 containing 30 parts by weight of 1.4 µm particle size $CaSO_4$ with the compositions of control run 2 containing 30 parts by weight 3.0 µm particle size $CaCO_3$ and control run 3 containing 30 parts by weight 10—15 µm particle size $CaCO_3$ it can be seen that all three compositions display similar properties in spiral flow, tensile strength, flexural modulus and flexural strength. However, the Izod impact strength of invention run 1 is higher than that of control run 2 and similar to that of control run 3. Also, the insulation resistance and the hardness of invention run 1 are superior to those of the control runs. The improvement in insulation resistance using the fine particle size $CaSO_4$ is also observed in invention run 4 in which 50 weight percent of the $CaSO_4$ is replaced by a like weight of fine particle size $CaCO_3$ even though the remaining physical properties are somewhat lower.

Headlamp housings were molded from each of the above compositions and vacuum metallized with aluminum to note the surface appearance. It was observed that the smoothest housing was derived from the composition of invention run 1.

Example 2

Following the techniques employed in Example 1, compositions containing 35 parts by weight of the same PPS, 10 parts by weight of the same glass fiber, 55 parts by weight of $CaSO_4$ 2 or 55 parts by weight of $CaCO_3$ 1, 1.07 parts by weight of the same $Li_2CO_3$ and 0.25 parts by weight of the same polyethylene were prepared and molded.

The filler used in each composition and the results obtained are given in Table 2.

TABLE 2
Properties of PPS-Filler Compositions

|  | Invention | Control |
|---|---|---|
| Run No. | 5 | 6 |
| Filler | $CaSO_4$ 2 | $CaCO_3$ 1 |
| Flow rate, g/10 min | 30.4 | 26.7 |
| Tensile strength, psi (MPa) | 9250 (63.8) | 9050 (62.4) |
| Elongation, % | 0.48 | 0.48 |
| Flexural modulus, psi($\times 10^6$)(GPa) | 2.76 (1.90) | 2.73 (1.88) |
| Flexural strength, psi (MPa) | 12,300 (84.8) | 11,800 (81.4) |
| Izod impact strength | | |
| notched, ft. lbs/in. (J/m) | 0.68 (36) | 0.52 (28) |
| unnotched, ft. lbs/in. (J/m) | 2.47 (132) | 2.03 (109) |
| Hardness, pencil | 7 | 6 |
| Insulation resistance, ohms | $1.3 \times 10^7$ | $3.2 \times 10^7$ |

Inspection of the data in Table 2 reveal that the relatively coarse particle size $CaSO_4$ of invention run 5 and the fine particle size $CaCO_3$ of control run 6 generally give about equivalent results. That is, the Izod impact strength values of run 5 are somewhat higher than run 6 while flow rate and other mechanical properties of run 5 are only slightly better than those of run 6. However, the insulation resistance of run 6 is slightly better than that of run 5.

These results taken in conjunction with those of Example 1 indicate (indirectly) that fine particle size $CaSO_4$ gives compositions exhibiting better insulation resistance properties that the relatively coarse particle size $CaSO_4$ 2.

Example 3

Following the techniques employed in Example 1, compositions containing 33.7 parts by weight of PPS (prepared as before but has a flow rate of about 430), 23.8 parts by weight of the same glass, 0.25 parts by weight of the same glass, 0.25 parts by weight of the same polyethylene, 0.75 parts by weight of inorganic pigment (0.058 wt. percent N110 carbon black, Phillips Petroleum Co., 0.067 wt. percent KY—787 yellow pigment, Du Pont, 0.0625 wt. percent R—2199 red iron oxide, Pfizer), 0.7 parts by weight of N-beta(N-vinyl-

6

benzylamine) ethyl gamma-aminopropyltrimethoxy silane monohydrogen chloride, 1.0 parts by weight N,N'-ethylene bis stearamide and a filler. The composition of run 7 contained 10 parts by weight CaSO$_4$ 1 and 28.8 parts by weight talc. The composition of run 8 contained 38.8 parts by weight talc.

The filler used in each composition and the results obtained are reported in Table 3.

TABLE 3

|  | Invention | Control |
|---|---|---|
| Run No. | 7 | 8 |
| Filler | CaSO$_4$ 1 (10)<br>Talc (28.8) | —<br>Talc (38.8) |
| Flow rate, g/10 minutes | 139 | 128 |
| Spiral flow, inches (cm) | 22 5/8 (57.5) | 23 1/2 (59.7) |
| Tensile strength, psi (MPa) | 10,800 (74.5) | 11,600 (80.0) |
| Elongation, % | 0.48 | 0.57 |
| Flexural modulus, psi ($\times 10^6$)(GPa) | 2.07 (1.42) | 2.02 (1.39) |
| Flexural strength, psi (MPa) | 15,200 (105) | 12,200 (84.1) |
| Izod impact strength |  |  |
| notched, ft. lbs/in. (J/m) | 0.47 (25) | 0.43 (23) |
| unnotched, ft. lbs/in. (J/m) | 0.97 (52) | 0.90 (48) |
| Insulation resistance, ohms | $1.2 \times 10^{11}$ | $4.0 \times 10^{10}$ |

The results in Table 3 indicate that substitution of 10 parts by weight of the talc with fine particle size CaSO$_4$ 1 in invention run 7 yields a composition exhibiting better insulation resistance properties than control run 8 in which talc is the sole mineral filler employed (neglecting the glass reinforcing agent). This result is in line with the other examples. The invention composition also displays somewhat better flexural properties and somewhat better impact properties than the talc-filled composition while the tensile, elongation and spiral flow properties are somewhat poorer (but acceptable).

Example 4

Following the techniques employed in Example 1, a series of compositions containing from 35 to 45 parts by weight of PPS (prepared as before but having a flow rate of 140 to 180), 55 to 60 parts by weight of the same glass, 0.25 part by weight of the same polyethylene, and zero or 5 parts by weight of CaSO$_4$ 1.

The compositions employed and the test results obtained are reported in Table 4.

TABLE 4
PPS Compositions Containing Low Levels of $CaSO_4$ 1

| Run No. | 9 | 10 | 11 |
|---|---|---|---|
| Remarks | Control | Invention | Control |
| PPS, parts by weight | 60 | 55 | 55 |
| Glass, parts by weight | 40 | 40 | 45 |
| $CaSO_4$ 1, parts by weight | 0 | 5 | 0 |
| Tensile strength, psi (MPa) | 20,200(139.4) | 19,600(135.2) | 24,600(169.7) |
| Elongation, % | 1.1 | 0.99 | 1.0 |
| Flexural strength, psi (MPa) | 27,000(186.3) | 26,900(185.6) | 30,000(207.0) |
| Izod impact strength | | | |
| notched, ft. lbs/in (J/m) | 1.5(79) | 1.4(75) | 1.6(85) |
| unnotched, ft. lbs/in (J/m) | 5.9(312) | 4.8(254) | 6.8(360) |
| Comparative tracking index, volts | 125 | 175 | 150 |
| Insulation resistance, ohms | $3.8 \times 10^{10}$ | $9.9 \times 10^9$ | $3.4 \times 10^9$ |

In comparing control run 9 with invention run 10 it can be seen that replacing 5 parts by weight PPS with $CaSO_4$ 1 does not hurt the mechanical properties but does slightly improve the insulation resistance and significantly improves the comparative tracking index from 125 volts to 175 volts.

In comparing control run 11 with invention run 10 the results show that replacing 5 parts by weight glass with $CaSO_4$ 1 impairs the mechanical properties somewhat but comparative tracking index and insulation resistance properties, on the other hand, are improved.

This example shows the beneficial effects of using low $CaSO_4$ 1 levels in PPS compositions containing glass and no other filler.

The examples show that fine particle size $CaSO_4$ 1 provides compositions exhibiting better insulation resistance properties than compositions filled with several kinds of $CaCO_3$, with talc and suggests that fine particle size $CaSO_4$ is better in these respects than coarser particle size $CaSO_4$. The mechanical properties of the various blends at equivalent filler and other component loadings and PPS used are generally about the same.

The results suggest that at least a portion of other common fillers including $CaCO_3$, talc, clay and the like can be replaced, preferably with the fine particle size $CaSO_4$ 1 filler to obtain suitable compositions for various uses, especially such uses as encapsulation of electronic parts where good insulation resistance is desirable.

**Claims**

1. A composition of matter comprising poly(arylene sulfide), fiberglass, and calcium sulfate having an average particle size of within the range of 0.5 to 10 μm.

2. The composition of claim 1 characterized by additionally containing one or more of an additive selected from polyethylene, waxes, silanes, pigments and talc.

3. The composition of claim 1 or 2, in which said poly(arylene sulfide) is present in an amount from 30 to 65 percent by weight, said fiberglass is present in an amount from 5 to 50 percent by weight and said calcium sulfate is present in an amount from 2 to 60 weight percent.

4. The composition of any of claims 1 to 3 characterized in that said calcium sulfate has an average particle size within the range of 0.5 to 5 μm.

5. A method for providing a composition containing poly(arylene sulfide) and fiberglass, having improved surface gloss and insulation resistance characterized by admixing calcium sulfate having an average particle size within the range of 0.5 to 10 μm with said composition.

6. The method of claim 5 characterized by admixing said calcium sulfate in an amount of 2 to 60 weight percent based on the total composition.

# 0 087 145

**Patentansprüche**

1. Masse enthaltend Poly(arylensulfid), Glasfasern, und Calciumsulfat mit einer mittleren Teilchengröße im Bereich von 0,5—10 µm.

2. Masse nach Anspruch 1, dadurch gekennzeichnet, daß sie zusätzlich eines oder mehrere Additive enthält, die aus Polyethylen, Wachsen, Silanen, Pigmenten und Talcum ausgewählt sind.

3. Masse nach Anspruch 1 oder 2, in der das Poly(arylensulfid) in einer Menge von 30—65 Gew.%, die Glasfasern in einer Menge von 5—50 Gew.%, und das Calciumsulfat in einer Menge von 2—60 Gew.% vorhanden ist.

4. Masse nach einem der Ansprüche 1—3, dadurch gekennzeichnet, daß das Calciumsulfat eine mittlere Teilchengröße im Bereich von 0,5—5 µm aufweist.

5. Verfahren zur Herstellung einer Poly(arylensulfid) und Glasfasern enthaltenden Masse mit verbessertem Oberflächenglanz und Isolationswiderstand, dadurch gekennzeichnet, daß man der Masse Calciumsulfat mit einer mittleren Teilchengröße im Bereich von 0,5—10 µm zumischt.

6. Verfahren nach Anspruch 5, dadurch gekennzeichnet, daß man das Calciumsulfat in einer Menge von 2—60 Gew.%, bezogen auf die Gesamtmasse, zumischt.

**Revendications**

1. Composition comprenant du poly(sulfure d'arylène), de la fibre de verre et un sulfat de calcium ayant une taille moyenne de particules dans l'intervalle de 0,5 à 10 microns.

2. Composition de la revendication 1, caractérisée en ce qu'elle contient en outre plusieurs additifs choisis parmi le polyéthylène, des cires, des silanes, des pigments et le talc.

3. Composition suivant les revendications 1 ou 2, dans laquelle ce poly(sulfure d'arylène) est présent dans une quantité de 30 à 65% en poids, et cette fibre de verre est présente dans une quantité de 5 à 50% en poids et ce sulfate de calcium est présent dans une quantité de 2 à 60% en poids.

4. Composition suivant l'une quelconque des revendications 1 à 3, caractérisée en ce que ce sulfate de calcium a une taille moyenne de particules dans l'intervalle de 0,5 à 5 microns.

5. Procédé pour réaliser une composition contenant du poly(sulfure d'arylène) et de la fibre de verre, ayant un brillant de surface et une résistance d'isolement améliorés, caractérisé en ce qu'on mélange du sulfate de calcium ayant une taille moyenne de particules dans l'intervalle de 0,5 à 10 microns avec cette composition.

6. Procédé selon la revendication 5, caractérisé en ce qu'on mélange ce sulfate de calcium dans une quantité de 2 à 60% en poids par rapport à la composition totale.

9